# EUROPEAN PATENT APPLICATION

(11) **EP 4 686 031 A1**
(43) Date of publication of application: **28.01.2026**
(21) Application number: 24189985.5
(22) Date of filing: 22.07.2024
(51) Int. Cl.: H02J 3/00

(54) **FAULT RIDE THROUGH CAPABILITY OF ELECTROLYSIS PLANTS**

(71) Applicant: Siemens Energy Global GmbH & Co. KG, 81739 München (DE)
(72) Inventor: Schumann, Sven, 91452 Wilhermsdorf (DE); Niedernhuber, Josef, 93426 Roding (DE); Bendig, Marvin, 90513 Zirndorf (DE); Loku, Fisnik, 90439 Nürnberg (DE); Langenberg, Nils, 90461 Nürnberg (DE)

(57) **Abstract**

The present invention pertains to a method for operating an electrolysis plant as well a corresponding electrolysis plant, in particular to provide compliance with fault-ride-through requirements of a grid. Accordingly, a method for operating an electrolysis plant (10) is suggested, comprising the steps of receiving (100) successive voltage measurements from an AC voltage input (12) designed for a connection to a grid (14) and for receiving power from the grid to supply at least one electrolyzer (18) of an electrolysis system of the electrolysis plant (10) with electrolysis current; detecting (110) at least one anomaly in the voltage level based on the voltage measurements; and switching (120) an on-load tap changer (22) connected to the AC voltage input (12) or to at least one transformer upstream of the electrolysis system in response to a detected anomaly to adjust the voltage input to the electrolysis system.

## Description

### Technical field

The present invention pertains to a method for operating an electrolysis plant as well a corresponding electrolysis plant, in particular to provide compliance with fault-ride-through requirements of a grid.

### Technological Background

A large number of electrolysis systems exist that are configured for water electrolysis in order to generate hydrogen, e.g. by means of a proton exchange membrane (PEM) electrolysis or an alkaline electrolysis. The electrolysis systems are typically connected to a public grid to supply the required electrical energy for producing hydrogen.

Connecting large electrolysis plants to the public grid requires compliance with/the fulfillment of the local grid code requirements. Part of these requirements, especially for large plants, is a Fault Ride Through (FRT) capability, which requires that the electrolysis plant remains fully connected to the grid in case of a temporary voltage dip or increase at the point of connection. This allows the availability of the load after the fault is cleared, what is a very important requirement for the grid operator. Should a large power generation plant trip in case of short time disturbances within the grid, e.g. typically a branch dropped into a power line and causes a short-circuit for a short time, the grid operator would struggle to balance the power input and output after fault clearance. The power plants producing the power cannot be adjusted quickly enough. Therefore, only a certain power is allowed to trip, and it is essential for large consumers to remain connected in case of a voltage disturbance.

The grid operator specifies a curve where the voltage increase and dip is time dependently shown, during which the plant must remain connected. Longer or stronger voltage disturbances generally allow a disconnection of the plant.

Fulfilling this requirement is a challenge for the electrolysis plant and its converter system, especially for an undervoltage event. On the one hand, it is a challenge to maintain operation at reduced voltage due to the considerable loss in current even in case of a relatively small voltage dip. For example, a given voltage drop may result in a current drop with a magnitude that is e.g. 10 to 50 fold as large. Since the production provided by the electrolyzer, as a consumer, is essentially dependent on the provided current, operation is considerably impaired in case of a voltage dip.

On the other hand, grid code requirements include that the consumer resumes operation once the fault is cleared and the normal voltage in the AC grid is re-established. Accordingly, electrolysis plants are required to resume full operation, i.e. at essentially the pre-fault level, within particular time limits set by the grid operator, e.g. within one second after sufficient recovery of the grid voltage. Due to the industrial scale of electrolysis plants, such rapid operational change is presently challenging.

Accordingly, a need exists to provide a reliable and cost-efficient approach to implement a fault ride through capability in an electrolysis system.

### Summary of the Invention

Starting from the prior art, it is an object of the present invention to provide an operation of an electrolysis plant with Fault Ride Through Capability.

The above object is achieved by the independent claims. Preferred embodiments of the invention are defined in the dependent claims, the Figures, and the following description.

Accordingly, in a first aspect, a method for operating an electrolysis plant is suggested, comprising the steps of:
- receiving successive voltage measurements from an AC voltage input designed for a connection to a grid and for receiving power from the grid to supply at least one electrolyzer of an electrolysis system of the electrolysis plant with electrolysis current;
- detecting at least one anomaly in the voltage level based on the voltage measurements; and
- switching an on-load tap changer connected to the AC voltage input or to at least one transformer upstream of the electrolysis system in response to a detected anomaly to adjust the voltage input to the electrolysis system.

By means of the immediate switching of an on-load tap changer arranged at the AC voltage input, a rapid modification of the voltage input to the electrolysis system, i.e. the voltage output on the secondary transformer side, may be provided, such that a required output voltage may be provided to the one or more electrolyzers without any significant delay. This way, it can be ensured that the on-load tap changer will already have a corresponding tap position, if the network voltage should recover to a predefined level and therefore make it possible for downstream circuitry, e.g. rectifier units and/or one or more converters, to draw the active power.

The on-load tap changer may e.g. be present or connected to a grid-connecting transformer as an AC voltage input that is designed for a connection to the grid and for receiving corresponding power from the grid to supply the electrolyzer with electrolysis current. In case of additional power generation units within the plant, the transformer may also provide excess power to the grid. Furthermore, instead of providing power, a main frequency within the electrolysis plant may be set by the one or more upstream transformers. Furthermore, the method may be applied to electrolysis plants coupled to a power plant, especially a renewable power plant, e.g. an onshore wind farm or photovoltaic park. The coupling might take place within the plant (so that one common AC input to the park is in place) or via a grid. The electrolysis plant may optionally be connected to one or more battery systems as an auxiliary or intermediate power supply. Typically, several respective transformers may be present for the one or more electrolyzers within the electrolysis system, either in parallel and/or serial connection. In order to provide a DC voltage for the one or more electrolyzers, a rectifier may be connected to the respective transformer, which converts an AC voltage on the input side into a first DC voltage on the output side.

Each of the one or more electrolyzers may be connected in parallel to the output of the rectifier via a converter, e.g. a step-down converter, which converts the first voltage into a second voltage, such that a modification of the output voltage may be provided to each of the one or more electrolyzers.

However, to control the output voltage in case of a determined anomaly, according to the invention, rather than controlling only the converter(s) and/or rectifier(s), an on-load tap changer is provided at the level of the AC voltage input or any transformer downstream thereof or upstream of the electrolysis system to enable a direct modification of the output voltage. This has the advantage that larger modification steps in the output voltage may be provided to ensure that a more continuous voltage may be provided and a corresponding load may be achieved.

The switching of the on-load tap changer may hence result in an adjustment of a tap position. The number of tap positions being changed may be based on the type of the anomaly and/or the magnitude of a determined voltage change. The anomaly may e.g. be the presence of a voltage drop or voltage deviation that exceeds a threshold, i.e. an absolute voltage or percentage change. Alternatively, the anomaly may also correspond to a level of voltage fluctuation, potentially indicating an instability of the grid. By changing the tap position of the on-load tap changer, the output voltage may be directly adjusted with considerable magnitude to abrogate any potential detrimental output voltage inconsistencies.

The voltage is preferably continuously measured, e.g. at the input of any transformer and/or at the input of the on-load tap changer. Preferably, the voltage is measured at the output of the transformer or grid transformer directly connected to the AC voltage input, i.e. at the voltage output on the secondary transformer side. Any deviations of the voltage with regard to a nominal voltage level may hence advantageously be immediately determined, such that the switching of the on-load tap changer may essentially occur simultaneously with the occurrence of the anomaly.

Preferably, the anomaly is a detected voltage drop and the on-load tap changer is stepped up to adjust the voltage towards a voltage level preceding the detected anomaly. Such voltage drop may occur transiently or abruptly and the immediate adjustment of the tap position may ensure that the voltage within the plant can quickly be increased to enable the electrolysis process to quickly draw consistent active current, e.g. during the fault and, in particular, after voltage recovery at its pre-fault power. The control of the on-load tap changer may be setup to even enable an undisturbed operation of the electrolysis system and the resulting gas production.

The voltage adjustment may be performed even if the voltage level is above a first predefined, lower limit but exceeds a second predefined limit range. For example, the second limit range may be related to and preferably corresponds to a more narrow limit range within a voltage band, e.g. an operational limit between 90 percent and 110 percent, preferably between 95 percent and 105 percent of the voltage during normal operation, and which may indicate the beginning of a Fault-Ride-Through event. The first predefined lower limit preferably relates to a time-dependent Fault-Ride-Through limit and preferably corresponds to a lower limit of a voltage band. However, even if said first predefined lower limit has not (yet) been reached, the on-load tap changer may already be switched to e.g. step up the voltage and maintain an essentially continuous output voltage for each of the one or more electrolyzers. A switching may also occur, if e.g. the upper limit of the second predefined limit range is exceeded, in particular if an upper limit of the voltage band or an upper time-dependent Fault-Ride-Through limit, which may form a third limit, is exceeded, which may e.g. correspond to a voltage level corresponding to between 110 percent and 150 percent of the voltage level during normal operation.

By the same token, the voltage adjustment may also be performed if the voltage level is below the first predefined lower limit. In particular, such adjustment may be provided in case of a more significant voltage drop, e.g. when a short-circuit occurs and causes short time disturbances within the grid. In line with the Fault-Ride-Through Capability according to the present invention, upon the determining of the corresponding anomaly, the on-load tap changer may be switched, in particular with a larger step or increase in the tap position, based on the determined voltage drop.

This rapid switching enables that a continuous power consumption may also be provided during the occurrence of the fault, i.e. before the recovery, wherein the compensation of the voltage drop may be dependent on the voltage adjustment capability of the on-load tap changer.

This way it can also be ensured that the on-load tap changer may have a higher tap position if the network voltage should not fully recover to its nominal voltage. To further facilitate the provision of a continuous output voltage, the voltage adjustment may hence also be performed if the voltage level exceeds the first predefined lower limit after initially falling below the first predefined lower limit. In other words, a further modification of the tap position may be provided, once a sufficient basis output voltage level has been achieved, which, however, does not yet correspond to the nominal voltage. For example, the voltage level may recover so as to be within a predefined voltage band, which may define an end of an FRT event and may even be within the second limit range described above, but is not yet at the nominal voltage. Accordingly, in particular, the voltage adjustment may be performed, if the measured voltage after an FRT event is not at the nominal voltage.

Such advantageous control of the output voltage may also facilitate that the electrolysis plant may be operated at the same power level compared with the voltage before the occurrence of the anomaly. Thereby, compliance with the grid code to re-establish normal operation within a predefined time after recovery of the input voltage may be further facilitated. In an especially advantageous arrangement, the output voltage adjustment and corresponding control is fast enough to balance the voltage disturbances in a way which enables an undisturbed electrolysis operation and gas production even during the fault, by limiting the voltage disturbance within a range close to the regular voltage band.

The first predefined lower limit is preferably related to a time-dependent fault-ride through limit, which may correspond to between 0 percent and 90 percent of the voltage level during normal operation. Accordingly, the anomaly may be determined as a voltage drop or voltage dip resulting in a voltage that is below the first predefined lower limit and exceeds an FRT limit range, wherein the electrolysis plant is required to maintain in a connected state to the grid for a predefined time period. The first predefined lower limit may correspond to a lower limit of a voltage band, which may indicate that an FRT event occurs or is likely to occur, or that a recovery from an FRT event has occurred. During said predefined time period, wherein the voltage preferably does not exceed a lower time-dependent FRT limit, and/or after recovery of the input voltage, the switching of the on-load tap changer according to the invention ensures that the voltage level may be accordingly adjusted to respectively maintain or resume operation at a near-nominal voltage level downstream of the on-load tap changer. Such switching may optionally also be performed, if the lower time-dependent FRT limit is exceeded and a sufficient voltage compensation may be provided by the switching of the on-load tap changer. Accordingly, despite the allowance to disconnect e.g. from the grid, operation of the electrolysis plant may be optionally maintained.

The switching of the on-load tap changer is preferably based on the received voltage measurements and provides a step of the measured voltage level of between 1 percent and 50 percent of the measured voltage level, e.g. as small as about 2 percent or about 5 percent for small adjustments or fine-tuning of the voltage level, preferably between 10 percent and 30 percent or between 10 percent and 20 percent. For example, a nominal voltage at the AC voltage connection may be between 100 kV and 123 kV, such that a voltage drop of e.g. 10 kV from 100 kV to 90 kV may be compensated by the switching of the on-load tap changer by about 10 percent. By the same token, a voltage drop of e.g. 30 kV may require a switching of the on-load tap changer by about 50 percent.

To facilitate a fast switching and rapid adjustment of the voltage level, the on-load tap changer is preferably a contactless on-load tap changer, is capable of switching multiple steps in one operation while optionally comprising a pre-selector, and/or requires a switching free of a pre-selector. In particular, the configuration of the on-load tap changer may be based on semi-conductors or other power electronics to perform the switching operation. The on-load tap changer, which may hence be semi-conductor-based, may be provided as a contactless enhancement being electrically connected to a mechanical on-load tap changer. By means of such fast switching on-load tap changer, voltage adjustments may be provided within less than one second, in particular less than 100 milliseconds, since the switching does not rely on a mechanical switching. Such fast switching is in contrast with present mechanical switching means, which may even require more than three seconds or more than six seconds to effect a voltage adjustment.

In addition to the switching of the on-load tap changer at the AC voltage input, it may furthermore be provided that successive voltage measurements are received from at least one converter arranged between the AC voltage input and a respective electrolyzer of the electrolysis plant, wherein the converter is controlled to modify its voltage or current output based on the detected anomaly and the voltage or current measurements from the converter.

For example, the converter or, specifically the rectifier, may be a step-down converter, which may be controlled or regulated based on the detected anomaly and the voltage or current measurements from the converter to adapt the level of its output voltage or current. Thereby, a fine tuning may be provided in addition to the one or more tapping steps provided at the on-load tap changer of the AC voltage input. This may be advantageous e.g. if the adjustment provided by the on-load tap changer is insufficient or if a further, smaller adjustment is required to approximate e.g. the nominal voltage level or current setpoint. The controlling or regulating may be performed by efficiently using a remaining control reserve, e.g. modifying a firing angle for thyristor-based systems or by modifying a duty cycle for IGBT-based systems.

In particular, the resulting voltage modification provided by controlling or regulating the converter may be between 0.01 percent and 10 percent, preferably between 0.1 percent and 5 percent of the voltage level measured at the input or output side of the converter.

The converter may furthermore be in communication with the on-load tap changer at the AC voltage input or with a control unit to receive an input signal corresponding to the switching state of the on-load tap changer and/or the voltage measurement at the AC voltage input. Also the on-load tap changer's control may receive information about the operational setpoints and control reserves of at least one downstream converter system. Thereby, a further feedback and improved fine tuning may be provided at the converter.

Although the controlling of the converter and the switching of the on-load tap changer may be provided simultaneously, the converter is preferably controlled after the switching of the on-load tap changer connected to the AC voltage input or it may react based on the on-load tap changer's adjusted voltage output. Advantageously, the on-load tap changer regulates and balances the secondary voltage side of the transformer based on its voltage measurements and the converter system(s) may adjust the electrolysis system(s) individually based on their individual setpoints and control features. Thereby, an initial larger voltage adjustment may be provided and a fine tuning may be adapted to the settling voltage level, e.g. if such further fine tuning is deemed necessary.

By using e.g. a step-down converter designed to be controllable and/or adjustable for each of the one or more electrolyzers, the current flow through each respective electrolyzer may also be adjusted as required, e.g. when the electrolyzers are connected in parallel.

To accommodate for further voltage deviations, one or more further on-load tap changers may be arranged at transformers downstream from the AC voltage input up to the level of the converter or rectifier, in particular at a corresponding transformer. Accordingly, a cascade of on-load tap changers may be present in the electrolysis plant. Due to the decoupling effect of e.g. a transformer at the AC voltage input, further regulation of the output voltage may be enabled, e.g. at lower voltage levels. Accordingly, it may be provided that based on the detected anomaly a downstream on-load tap changer is switched. For example, a grid transformer, e.g. at the AC voltage input, may provide a voltage output of e.g. 110 kV for a large number of electrolysis systems, e.g. more than ten, while a distribution transformer may be present with e.g. an output of 30 kV for feeding e.g. six electrolysis systems, and a rectifier transformer providing an output of e.g. 1 kV may be present for each electrolysis system. According to a preferred embodiment, each of these transformers may include an on-load tap changer in order to perform the required voltage adjustment in a corresponding cascade of on-load tap changers.

Preferably, the switching of a downstream on-load tap changer is based on the received voltage measurements and provides a step of between 5 percent and 25 percent of the measured or nominal voltage level, preferably between 5 percent and 15 percent. The one or more downstream on-load tap changers are preferably switched after the upstream on-load tap changer has been switched, such that a delay in the operation may be introduced. Preferably also the electrolysis converter is controlled to modify its voltage output in advance to an on-load tap changer operation at its level, preferably at its directly connected transformer. The operation of the directly connected transformer's on-load tap changer is preferably triggered by exceeding a defined limit for the converter's control variable, like firing angle for thyristor-based systems and duty cycle for voltage source converters. In an especially preferred solution, the implementation of delays, hysteresis, or similar, is applied in the control features especially for the on-load-tap-changers downstream from the first, fast-acting on-load-tap-changer as seen from the AC input to prevent control oscillations in case of cascaded on-load-tap-changers.

Accordingly, a sequence of steps may be performed upon the detection or determining of an anomaly, wherein, as a first step, the on-load tap changer at the AC voltage input is switched to enable e.g. an adaptation to a large voltage drop. In parallel, a control reserve may be regulated at the level of the rectifier or converter, in particular to provide a fine tuning of the hence adjusted voltage to approximate a nominal voltage or at least increase the voltage as close as possible to the voltage required to meet the original setpoint. If during the occurrence of the anomaly the voltage deviation is still determined to be too strong, e.g. the adjusted voltage is still below the voltage to reach the desired DC current, the on-load tap changer at the level of the rectifier or converter is preferably switched.

Thereby, an advantageous control of the voltage is provided, wherein an immediate switching of the on-load tap changer at the AC voltage input enables a direct and considerable adjustment of the voltage within the entire plant in case of a determined anomaly, e.g. to avoid inoperability of the electrolysis plant. Subsequently, a fine tuning or further voltage modification may be provided at lower control levels of the electrolysis plant, as required.

While the switching of the on-load tap changer at the level of the rectifier or converter may be advantageous to avoid that the voltage is e.g. still below a predefined lower limit, such step may also be performed to further improve the voltage output to e.g. approximate a nominal voltage level. In other words, if a grid failure persists and has not yet recovered, the switching of the on-load tap changer at the converter may also be provided, even if the voltage is above a lower time-dependent FRT limit or even above the predefined lower limit to provide improved or even nominal operation of the electrolysis plant during the occurrence of the anomaly.

Accordingly, the downstream on-load tap changer, in particular at the level of the converter, may be switched if the voltage level is above a first predefined lower limit, in particular within a voltage band or even within a second predefined limit rage, but not correspond to a nominal voltage.

Once the fault or anomaly has been cleared at least to a tolerable level as defined e.g. by the first predefined lower limit and/or a second limit range, which may be determined based on the received voltage measurements at the AC voltage input, the operation of the electrolysis plant may return to normal operation. Accordingly, the on-load tap changer connected to the AC voltage input is preferably switched to step down, if one or more subsequent voltage measurements exceed an upper voltage limit, e.g. of the second limit range. This way, the secondary voltage output may be controlled to remain within a defined voltage band.

Depending on the configuration of the electrolysis plant and/or the performed steps upon the determining of the anomaly, the switching of the on-load tap changer connected to the AC voltage input to step down may be performed as a first step, wherein an optional switching of a downstream on-load tap changer, for example at the level of the converter, may be subsequently reversed, and/or an optional previous control setting at the converter may be reversed or adjusted either subsequently or in parallel. In other words, based on the received voltage measurements, a downstream on-load tap changer, for example, the converter on-load tap changer at the level of the converter, may be switched to approach the pre-fault position and/or the converter may be controlled to approach the pre-fault operation after performing a step down of the on-load tap changer at the AC voltage input.

According to a second aspect, an electrolysis plant is suggested, comprising one or more electrolyzers of at least one electrolysis system, an AC voltage input for connecting the electrolysis plant to a grid and for supplying power to the one or more electrolyzers in a connected state with the grid, a converter arranged between the AC voltage input and a respective electrolyzer, and a control unit configured to receive successive voltage measurements from the AC voltage input. According to the invention, the electrolysis plant furthermore comprises an on-load tap changer connected to the AC voltage input, wherein the control unit is furthermore configured to switch the on-load tap changer in response to a determined anomaly based on the voltage measurements to adjust the voltage input to the at least one electrolysis system.

As described above, the AC voltage input may comprise a transformer, wherein the on-load tap changer may accordingly readily adjust the output voltage, when an anomaly such as a severe voltage drop is determined. Thereby, it may be avoided that an insufficient voltage is provided to the downstream one or more electrolyzers, such that a required current may be provided and consumed by the one or more electrolyzers. The immediate switching of the on-load tap changer hence not only enables that operation may be continued at a required level once the anomaly or failure has been resolved, which is advantageous for the balancing of the grid. It also optionally enables that operation may be continued during the occurrence of the anomaly, e.g. during a Fault-Ride-Through situation. Thereby, efficient operation of the electrolysis plant and safe connection to the grid may be ensured.

The same procedure may be applied to react on a voltage distortion resulting in an overvoltage, especially when converter systems with boost operation are supplying the DC voltage to the electrolysis systems, since these systems often have limited capabilities to reduce the output voltage. In this case the upper voltage limit, e.g. of the second limit range or of the voltage band, is the corresponding threshold for the on-load tap changer's operation. The same principle for the operational regime and sequence applies.

Preferably, the electrolysis plant is configured to perform the method according to invention as described above. It is to be understood that the electrolysis plant may accordingly comprise one or more rectifiers, converters, transformers, and/or further on-load tap changers, as defined by the corresponding method steps.

### Brief description of the drawings

The present disclosure will be more readily appreciated by reference to the following detailed description when being considered in connection with the accompanying drawings in which:
Figure 1 is a schematic view of method steps according to the invention with preferred optional method steps;
Figure 2 is a schematic view of an electrolysis plant according to the invention; and
Figure 3 is a schematic view of preferred voltage limits controlling the switching of the on-load tap changer according to the invention.

### Detailed description of preferred embodiments

In the following, the invention will be explained in more detail with reference to the accompanying Figures. In the Figures, like elements are denoted by identical reference numerals and repeated description thereof may be omitted in order to avoid redundancies.

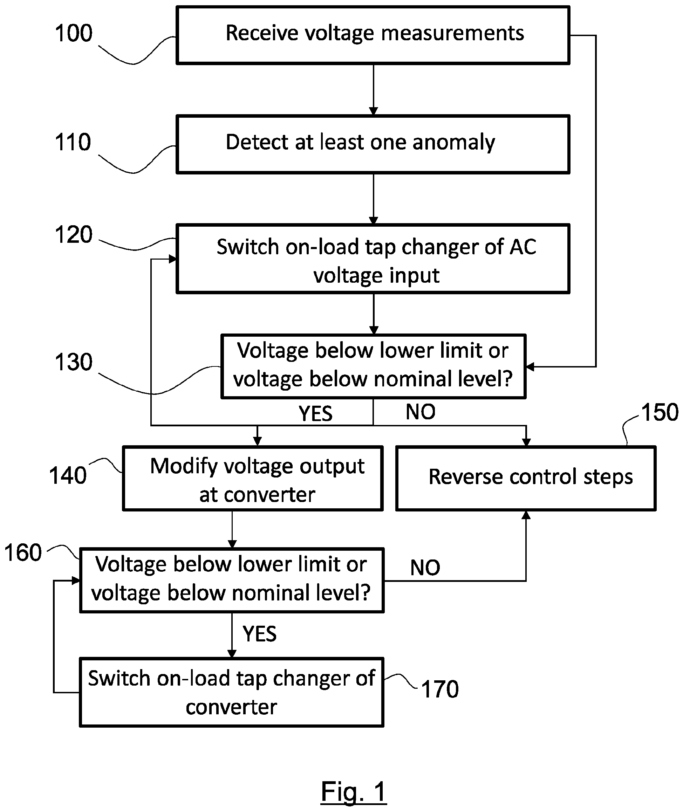

In Figure 1 a schematic view of the various method steps according to the invention is shown, wherein some of the preferred yet optional method steps have been included.

Accordingly, in a first step 100, voltage measurements are received from an AC voltage input of an electrolysis plant, wherein the AC voltage input is connected to a grid and capable to supply one or more downstream electrolyzers with a required current for the production of a gas, in particular hydrogen. The measurement is preferably measuring the secondary voltage or primary-side voltage of the transformer directly connected to the AC voltage input. According to the present example, to provide Fault-Ride-Through (FRT) capability, an anomaly may be detected in step 110, which is based on the received voltage measurements and may be determined based on one or more subsequent voltage measurements indicating a voltage deviation, in this example, a voltage drop, in particular a voltage drop causing the voltage level to fall below a first predefined lower limit, e.g. a lower limit of a voltage band such as below 85 to 90 percent of the nominal voltage level. The voltage may e.g. be above or below a lower time-dependent FRT limit.

Based on the detected anomaly, e.g. caused by a grid fault, an on-load tap changer at the AC voltage input is switched in step 120. The switching involves a step up in case of a voltage drop to increase the corresponding tap position, such that a connected transformer may adjust and accordingly increase the AC voltage output to adjust for the voltage drop.

After switching the on-load tap changer in step 120, it is determined, preferably continuously, whether the hence adjusted voltage on the output side is still below the first predefined lower limit, indicating that a (severe) fault persists, in step 130. If the adjusted voltage is still below the first predefined lower limit, this may indicate that the anomaly has not yet been resolved or that the step up of the on-load tap changer has not resulted in a sufficient increase of the voltage output. In such case, a further step-up of the on-load tap changer may be performed, if available. Such step up of the on-load tap changer may also be performed, if it is determined that the voltage level has partially recovered and lies within a predefined voltage band, but is still not at a nominal voltage. For example, the voltage level may exceed a lower limit of a second limit range that is narrower and is defined within the voltage band.

Alternatively, or in addition, the voltage output may optionally also be modified further at the downstream converter level in step 140, e.g. by modifying the firing angle and/or by efficiently using a control reserve. For example, such modification may provide a fine tuning of the output voltage to approximate a nominal voltage level or may be provided to ensure that the voltage output is above the predefined lower limit.

In addition, further downstream transformers equipped with on-load tap changers, such as a distribution transformer and/or a respective rectifier transformer, which are not shown in Figure 1, can also tap up to increase the voltage further, preferably with a delay in comparison to the operation of the AC voltage input's on-load tap changer.

The steps 120, 140 of repeating the switching of the on-load tap changer and/or the modification of the output voltage at the converter level may also be performed if the voltage level is above a lower FRT limit or even above a first predefined lower limit, yet does not correspond to or is not within a predefined range of the nominal level, e.g. exceeds a second predefined limit range, such as a more narrow range within an operational voltage band. Such adjustment may be particularly performed if operation is maintained during the occurrence of the anomaly, e.g. during the recovery of a grid fault. Such adjustment hence enables efficient further operation of the electrolysis plant, if the magnitude and the duration of the voltage drop does not preempt further operation.

Should the switching of the on-load tap changer in step 120 have resulted in an achievement of essentially the nominal voltage level or if the voltage level exceeds the upper limit of the second limit range or the upper limit of the nominal voltage band, e.g. due to full or partial recovery of the anomaly or fault, the on-load tap changer may be switched back to regulate the voltage output and keep it within a defined band in step 150, preferably successively to avoid large voltage deviations.

After the modification at the converter level in step 140, the voltage level may still not be sufficient, e.g. still exceeds a second limit range or voltage band, as determined in step 160. In such situation, an on-load tap changer at the level of the converter, e.g. at a corresponding transformer, may be switched in step 170 to perform a step-up of the corresponding tap position. Thereby, a further step in the voltage adjustment may be provided, optionally using successive steps. Advantageously, such switching of the converter's on-load tap changer may also be provided, if the control reserve drops below a predefined value in order to maintain the control capabilities. As described above, the control steps may be reversed in step 150, if a sufficient and stabile voltage level has been achieved and, in particular, once the anomaly has been resolved and the voltage on the secondary side of the AC voltage input's transformer exceeds e.g. a predefined upper limit. Operation of downstream on-load tap changers is preferably only performed, if their switching times are sufficiently fast to contribute during a highly dynamic fault event. Otherwise, the operation of these on-load tap changers may be optionally inhibited until the voltage within the plant or at the AC voltage input has recovered to the nominal band.

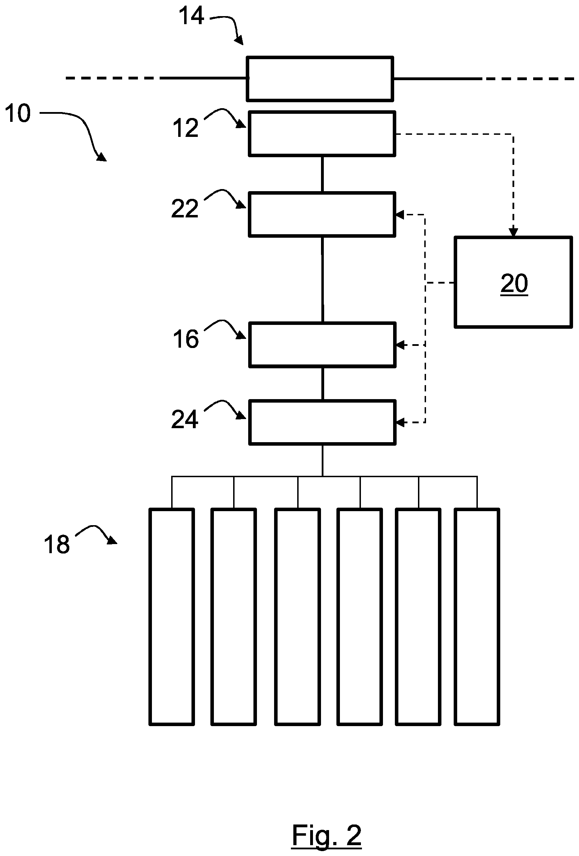

Figure 2 schematically depicts an electrolysis plant 10 according to the invention.

In order to supply the electrolysis plant 10 with the required current, the electrolysis plant 10 may comprise an AC voltage input 12 that forms a connecting interface with a grid or grid connection 14. Typically, such connecting interface is provided by or at least comprises a transformer, not shown in further detail. Accordingly, an AC voltage from the grid 14 is provided to the electrolysis plant 10. In order to provide a required DC voltage, one or more converters 16 are arranged downstream, which usually feature rectifiers for the AC/DC conversion. The converter 16 furthermore facilitates the distribution of the output voltage to downstream electrolyzers 18, which in the present example are arranged in parallel. The electrolyzers 18 may be configured as PEM electrolyzers, which may be particularly designed for hydrogen production, hydrocarbon production, or alkanol production for use as a potential fuel.

In order to control the voltage fed to the plant, e.g. the transformer at the AC voltage input 12, and/or the voltage provided at the level of the converter 16, the electrolysis plant 10 comprises a control unit 20, which is configured to receive voltage measurements from the AC voltage input 12. To provide Fault-Ride-Through capability, control unit 20 is furthermore communicatively coupled with an on-load tap changer 22 connected to the AC voltage input and, optionally, to an on-load tap changer 24 at the level of the converter 16. Accordingly, if an anomaly such as a voltage drop is detected, based on the received voltage measurements, the control unit 20 may output a control signal causing the on-load tap changer 22 to step up the tap position to accordingly increase the voltage level. As described above, the number of steps may be based on the determined voltage drop, particularly resulting in a 10 percent to 50 percent increase of the voltage, depending on the configuration of the on-load tap changer 22.

By the same token, the control unit 20 may also subsequently output a signal to the converter 16 to modify its output voltage by efficiently using any potential control reserve. Such control signal may also be output by a further independent control unit (not shown), which may e.g. be connected to the converter 16 and the on-load tap changer 24 in order to enable improved communication and control speed. Such further control unit may e.g. adjust the setpoints and delay times by means of a corresponding output signal in order to achieve a coordination in a timely sufficient fashion. Depending on the required adjustment and configuration of the electrolysis plant 10, the control unit 20 or an individual control unit may furthermore subsequently output a signal to the optional on-load tap changer 24 at the level of the converter 16 to provide a further increase of the voltage level, should the increase enabled by the on-load tap changer 22 at the AC voltage input 12 and the optional modification of the voltage output at the converter 16 not be sufficient or a predefined lower limit of the converter's control reserve have been reached.

Thereby, an immediate adjustment of the voltage level may advantageously be provided by the switching of the on-load tap changer 22 at the AC voltage input 12 while further improvement of the voltage level may be provided by subsequent adjustments based on the control of the converter 16 and the optional cascaded on-load tap changer 24 at the level of the converter 16.

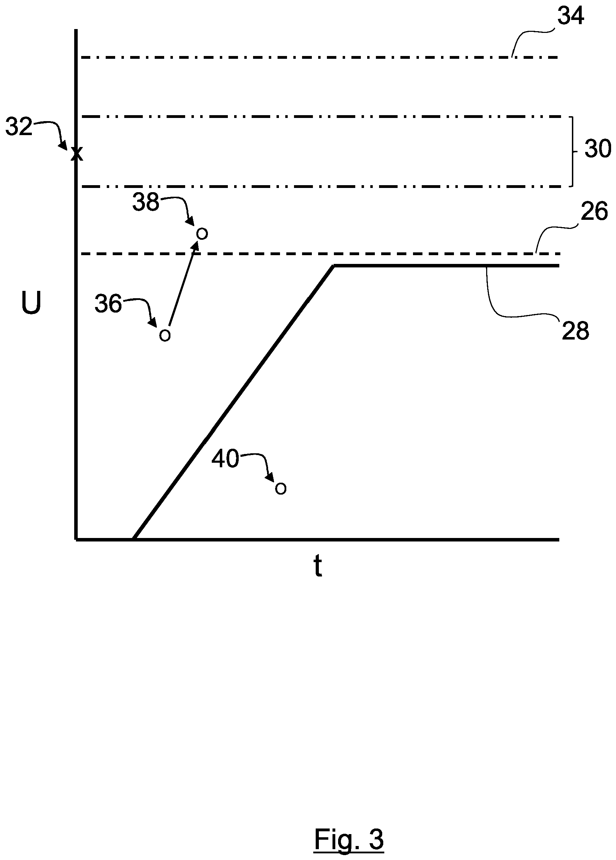

In Figure 3 preferred voltage limits are depicted that may trigger the control or switching of the on-load tap changer at the AC voltage input. The limits of the voltage (U) are shown over time (t). As indicated with line 26, a first predefined lower limit may be provided, which approximates the upper value of the lower time-dependent FRT limit 28. The first predefined limit 26 may correspond to a lower limit of a voltage band, which may e.g. be between about 75 percent and 90 percent. Although the lower time-dependent FRT limit 28 is depicted on the right to be different from the first predefined lower limit 26, these voltage levels may also be essentially the same.

The first predefined lower limit 26 is at a voltage level that is lower than a second limit range 30, which may e.g. form a voltage range between 95 percent and 105 percent of the nominal voltage 32. The second limit range 30 is furthermore lower than a third limit, which may be formed by an upper time-dependent FRT limit or upper voltage limit of a voltage band. Accordingly, according to the present, non-limiting example, a voltage band may e.g. be defined by the first predefined lower limit and the third limit.

If a first voltage measurement 36 is obtained that is below the first predefined lower limit 26, this may indicate the occurrence of e.g. a grid failure or FRT event, wherein the electrolysis plant is required to maintain connected, as long as the lower time-dependent FRT limit 28 is not exceeded. As shown, the first voltage measurement 36 also exceeds the second limit range 30. Such voltage drop may be accordingly detected as an anomaly, wherein the switching of the on-load tap changer at the AC voltage input may result in a stabilization of the voltage, as indicated by the second voltage measurement 38. Said second voltage measurement 38 is now above the first predefined lower limit 38, as indicated by the arrow, but still exceeds the second limit range 30. Accordingly, a further step-up of the on-load tap changer may be performed to further improve the voltage level, e.g. to a level within the second limit range 30 or about the nominal voltage 30.

Such switching of the on-load tap changer may also be performed, if a voltage measurement is obtained that is above the first predefined lower limit 36, i.e. in the absence of the voltage initially dropping below the first predefined lower limit 26. Accordingly, a rapid optimization of the voltage level may be provided, such that unfavorable voltage drop may be instantly counteracted, i.e. both during an FRT event and during less severe voltage fluctuations.

By the same token, such switching may also be performed if the lower time-dependent FRT limit is exceeded. In such case the voltage level is also below the first predefined lower limit 26, e.g. with an extended duration of the anomaly, indicating a severe FRT event 40. In such case, should this be within the capabilities of the on-load tap changer, a switching of the on-load tap changer may also be performed in order to provide a sufficient voltage level, preferably at least above the lower limit of the voltage band, more preferably within the second limit range 30. Thereby, sufficient operability of the electrolysis plant may be provided at least after recovery of the anomaly, preferably also during the occurrence of the severe FRT event 40.

Although not shown in Figure 3, reverse control steps of the on-load tap changer may also be performed, if e.g. a third voltage measurement (not shown) exceeds the upper limit of the second limit range 30 or the third limit 34.

It will be obvious for a person skilled in the art that these embodiments and items only depict examples of a plurality of possibilities. Hence, the embodiments shown here should not be understood to form a limitation of these features and configurations. Any possible combination and configuration of the described features can be chosen according to the scope of the invention.

## Claims

1. A method for operating an electrolysis plant (10), comprising the steps of:
- receiving (100) successive voltage measurements (36, 38, 40) from an AC voltage input (12) designed for a connection to a grid (14) and for receiving power from the grid to supply at least one electrolyzer (18) of an electrolysis system of the electrolysis plant (10) with electrolysis current;
- detecting (110) at least one anomaly in the voltage level based on the voltage measurements (36, 38, 40); and
- switching (120) an on-load tap changer (22) connected to the AC voltage input (12) or to at least one transformer upstream of the electrolysis system in response to a detected anomaly to adjust the voltage input to the electrolysis system.

2. The method according to claim 1, wherein the anomaly is a detected voltage drop and wherein the on-load tap changer (22) is stepped up to adjust the voltage towards a voltage level preceding the detected anomaly.

3. The method according to claim 1 or 2, wherein the voltage adjustment is performed if the voltage level is above a first predefined lower limit (26) and exceeds a second predefined limit range (30).

4. The method according to claim 1 or 2, wherein the voltage adjustment is performed if the voltage level is below a first predefined lower limit (26).

5. The method according to any of the preceding claims, wherein the voltage adjustment is performed if the voltage level exceeds a first predefined lower limit (26) after initially falling below the first predefined lower limit (26).

6. The method according to any of claims 3 to 5, wherein the first predefined lower limit (26) is related to a time-dependent fault-ride-through limit (28), preferably corresponding to between 0 percent and 90 percent of the voltage level during normal operation.

7. The method according to claim 1, wherein the anomaly is a detected voltage increase and wherein the on-load tap changer (22) is stepped down to adjust the voltage towards a voltage level preceding the detected anomaly.

8. The method according to claim 7, wherein the voltage adjustment is performed, if the voltage level is above an upper limit of a second predefined limit range (30).

9. The method according to claims 8, wherein the voltage adjustment is performed, if an upper limit of a voltage band (34) or an upper time-dependent Fault-Ride-Through limit, preferably corresponding to between 110 percent and 150 percent of the voltage level during normal operation, is exceeded.

10. The method according to any of the preceding claims, wherein the switching (120) of the on-load tap changer (22) is based on the received voltage measurements and provides a step of the measured voltage level of between 1 percent and 50 percent of the measured voltage level, preferably between 10 percent and 30 percent or between 10 percent and 20 percent.

11. The method according to any of the preceding claims, wherein the on-load tap changer (22) is a contactless on-load tap changer, wherein the switching (120) does not involve a pre-selector, wherein the switching (120) can adjust more than one tap position per operation, and/or wherein the on-load tap changer (22) comprises power electronics or semi-conductors configured to perform the switching operation.

12. The method according to any of the preceding claims, wherein successive voltage measurements are received from at least one converter (16) arranged between the AC voltage input (18) and a respective electrolyzer (18) of the electrolysis plant (10), wherein the converter (16) is controlled to modify (140) its voltage output or current based on the detected anomaly and the voltage measurements or current measurements from the converter.

13. The method according to claim 12, wherein the resulting voltage modification (140) is between 0.01 percent and 10 percent, preferably between 0.1 percent and 5 percent of the voltage level measured at the input or output side of the converter (16).

14. The method according to claim 12 or 13, wherein the converter (16) is controlled in parallel to the switching of the on-load tap changer (22), in reaction to a voltage disturbance, or to an output adjusted by the on-load tap changer, or after the switching (120) of the on-load tap changer (22) connected to the AC voltage input (12).

15. The method according to any of claims 12 to 14, wherein based on the detected anomaly an on-load tap changer (24) at one or more transformers downstream from the AC voltage input (12), preferably at the level of the converter, is switched (170) .

16. The method according to claim 15, wherein the switching (170) of the respective downstream on-load tap changer (24) is based on the received voltage measurements and provides a step of between 5 percent and 25 percent of the voltage level being measured or during normal operation, preferably between 5 percent and 10 percent.

17. The method according to claim 15 or 16, wherein the one or more downstream on-load tap changers (24) are switched (170) after the upstream on-load tap changer (22) is switched and/or the converter (160) is controlled to modify (140) its voltage output.

18. The method according to any of claims 15 to 17, wherein the one or more downstream on-load tap changers (24) are switched (170) if the voltage level is above a first predefined lower limit (26) and/or exceeds a second predefined limit range (30).

19. The method according to any of the preceding claims, wherein the on-load tap changer (22) upstream of the electrolysis system is switched to step down (150), if one or more subsequent voltage measurements (36, 38, 40) exceed an upper voltage limit.

20. An electrolysis plant (10), comprising
one or more electrolyzers (18) of at least one electrolysis system,
an AC voltage input (12) for connecting the electrolysis plant (10) to a grid (14) and for supplying power to the one or more electrolyzers (18) in a connected state with the grid (14),
a converter (16) arranged between the AC voltage input (12) and a respective electrolyzer (18),
an on-load tap changer (22) connected to the AC voltage input (12), and
a control unit (20) configured to receive successive voltage measurements (36, 38, 40) from the AC voltage input (12) and to switch the on-load tap changer (22) in response to a determined anomaly based on the voltage measurements to adjust the voltage input to the at least one electrolysis system.

21. The electrolysis plant (10) according to claim 20, configured to perform the method according to any of claims 2 to 19.
